# EUROPÄISCHE PATENTSCHRIFT

(11) **EP 2 067 655 B1**
(45) Veröffentlichungstag und Bekanntmachung des Hinweises auf die Patenterteilung: **21.03.2012**
(21) Anmeldenummer: 07023466.1
(22) Anmeldetag: 04.12.2007
(51) Int. Cl.: B60N 2/48, B60N 2/56, B60N 2/58

(54) **Fahrzeugsitz**
Vehicle seat
Siège de véhicule

(43) Veröffentlichungstag der Anmeldung: 10.06.2009
(73) Patentinhaber: Fallen, Manfred, 67697 Otterberg (DE)
(72) Erfinder: Fallen, Manfred, 67697 Otterberg (DE)
(74) Vertreter: Grünecker, Kinkeldey, Stockmair & Schwanhäusser

(56) Entgegenhaltungen:
- WO-A-2007/012470
- DE-A1- 10 047 754
- DE-B3-102004 002 074
- JP-A- 4 158 807

## Beschreibung

Die vorliegende Erfindung betrifft einen Fahrzeugsitz mit einer Rückenlehne, einer höhenverstellbaren Kopfstütze mit Kopfpolster und einer Belüftungsvorrichtung, deren Ausblasöffnung zum Ausblasen eines Warmluftstromes an der Oberseite der Rückenlehne angeordnet ist.

Ein solcher gattungsgemäßer Fahrzeugsitz dient insbesondere bei einem Cabriolet der Umströmung des Nackenbereiches eines Fahrzeuginsassen, speziell bei geöffnetem Dach zur Kompensation von Zugluft. Ein gattungsbildender Fahrzeugsitz ist beispielsweise aus der DE 10 2004 002 074 B3 bekannt. Bei diesem Stand der Technik erstreckt sich zwischen der Oberseite der Rückenlehne und dem Kopfpolster eine textile Membrane, die den dazwischen vorgesehenen Zwischenraum überdeckt und als Diffusor wirkt, so dass der Warmluftstrom, der an der Oberseite der Rückenlehne zwischen der textilen Abdeckung und dem Fahrzeuginsassen aus der Rückenlehne austritt, in Richtung auf den Fahrzeuginsassen umgelenkt wird. Die textile Abdeckung ist auf Seiten der Rückenlehne über einen Wickelmechanismus aufgewickelt, so dass eine Anpassung der textilen Abdeckung an verschiedene Positionen der Kopfstütze relativ zu der Rückenlehne möglich ist. Bekanntlich muss die Kopfstütze in ihrer Position zum Schutz der Fahrzeuginsassen bei einem Unfall individuell an die Größe des Fahrzeuginsassen angepasst werden.

Die vorerwähnte Lösung ist relativ aufwendig und darüber hinaus unansehnlich, da ein faltfreies Aufspannen der textilen Abdeckung nicht immer möglich ist. Darüber hinaus muss die Abdeckung hinsichtlich ihrer Abmessungen an die Position von Tragstangen angepasst werden, die die Kopfstütze tragen und die verschieblich in der Rückenlehne gelagert sind.

Bei einer aus der DE 100 47 754 bekannten alternativen Ausgestaltung sind im oberen Bereich der Rückenlehne, die den Schulterbereich umgibt, eine Vielzahl von Luftaustrittsöffnungen vorgesehen, welche ein gleichmäßiges Luftkissen im Schulter- und Nackenbereich eines Insassen bewirken sollen, und zwar auf Grund einer Luftströmung, die von der Rückseite des Fahrzeugsitzes angesogen und nach vorne durch die Polsterung und Bespannung der Rückenlehne hindurchgedrückt wird. Diese Ausgestaltung erfordert eine gleichmäßige Perforation des oberen Bereiches der Rückenlehne, was zu Einschränkungen hinsichtlich der Wählbarkeit geeigneter Bezüge für das Polster der Rückenlehne führt. Bei einer alternativen Ausgestaltung ist in die Rückenlehne eine Luftverteileinrichtung integriert, die über verschiedene Ausblasöffnungen Luft an den Schulter- Nacken- und Kopfbereich des Insassen abgeben soll. Auch diese Ausgestaltung ist relativ aufwendig. Darüber hinaus sind die verschiedenen Ausströmöffnungen am Fahrzeugsitz aus ästhetischen Gründen zu vermeiden. Weiterhin kann mit der vorbekannten Lösung keine an die individuelle Größe des Fahrzeuginsassen angepasste Nackenströmung erreicht werden. Der Nacken ist aber gerade im Bezug auf unangenehme Zugluftströmungen, der empfindüchste Teil des Menschen.

Bei einer weiteren, aus der DE 100 54 010 bekannten Ausgestaltung ist an der Rückenlehne ein höhenverstellbares Ausblasrohr befestigt, dessen Ausblasöffnung in die Kopfstütze integriert und mit dieser höhenverstellbar ist. Bei herkömmlichen Fahrzeugsitzen, bei denen die Kopfstütze erhaben über der Rückenlehne angeordnet ist, führt eine solche Ausgestaltung zu einer unansehnlichen Ausgestaltung mit einem Rohrstück zwischen der Oberseite der Rückenlehne und der Kopfstütze. Darüber hinaus sind zur luftdichten Ausbildung einer höhenverschieblichen Luftstrecke mittels Rohren besondere Maßnahmen zu treffen, die den Aufbau aufwendig und kostspielig machen.

Der vorliegenden Erfindung liegt die Aufgabe zu Grunde, einen Fahrzeugsitz der eingangs genannten Art zu schaffen, der eine Umströmung des Kopf- Nacken- bzw. Schulterbereiches des Fahrzeuginsassen ermöglicht und der höheren ästhetischen Anforderungen genügt und dabei einfach herzustellen ist.

Zur Lösung dieses Problems wird der vorliegenden Erfindung ein Fahrzeugsitz mit den Merkmalen von Anspruch 1 vorgeschlagen. Dieser unterscheidet sich dadurch von dem vorbekannten Stand der Technik, dass im unteren Bereich der Kopfstütze ein Umlenkmittel vorgesehen ist, welches in das Kopfpolster integriert ist und durch welches der von der Ausblasöffnung abgegebene Warmluftstrom in den Kopf- und/oder Nackenbereich des Fahrzeuginsassen umgelenkt werden kann. Als Umlenkmittel ist jedes Mittel zu verstehen, welches speziell an der, der Rückenlehne gegenüberliegenden Unterseite der Kopfstütze ausgebildet ist, und zwar in einer speziellen geometrischen Ausformung, die eine gezielte Umlenkung des Luftstromes auf den Kopf- bzw. Nackenbereich des Fahrzeuginsassen erlaubt.

Die hierzu vorgesehene Umlenkfläche des Umlenkmittels wird vorzugsweise durch ein Spritzgussteil, besonders bevorzugt in Form einer Kunststoffschale gebildet, welche an dem Kopfpolster befestigt ist, und zwar vorzugsweise mittels Einklipsen. Diese Ausgestaltung ermöglicht die Ausformung der Umlenkfläche zur bestmöglichen Umlenkung des Warmluftstromes auf den Nacken- bzw. Kopfbereich des Fahrzeuginsassen. So sind konkave und/oder konvexe Ausgestaltungen möglich. Im Falle eines relativ gebündelten, aus dem oberen Bereich der Rückenlehne ausströmenden Warmluftstromes, kann dieser verhältnismäßig diffus über das Umlenkmittel in Richtung auf den Kopf- bzw. Nackenbereich umgelenkt und abgestrahlt werden. Hierzu kann das Umlenkmittel insbesondere eine raue Oberflächenstruktur haben, welche den relativ gebündelten Warmluftstrom bricht und weich auf den Nacken- bzw. Kopfbereich des Fahrzeuginsassen umlenkt.

Im Gegensatz zum vorbekannten Stand der Technik wird bei dem erfindungsgemäßen Lösungskonzept zwischen der Oberseite der Rückenlehne und der Unterseite der Kopfstütze eine Luftstrecke genutzt, um den Luftstrom vorzugsweise stark gebündelt zunächst gegen die Unterseite der Kopfstütze und dort speziell gegen das Umlenkmittel anzuströmen. Erst hinter dem Umlenkmittel ist der Warmluftstrom derart aufgefächert und vergleichmäßigt, dass ein für den Fahrzeuginsassen angenehmes Umströmen des Kopf- und Nackenbereiches erreicht wird.

Im Hinblick auf eine möglichst ansprechende Gestaltung ist es weiterhin zu bevorzugen, das Umlenkmittel so in das Kopfpolster zu integrieren, dass das Umlenkmittel innerhalb einer Hüllfläche des Kopfpolsters vorgesehen ist. Maßgeblich für diese Sichtweise ist insbesondere eine Querschnittsansicht durch die Kopfstütze, wobei die Hüllfläche des Kopfpolsters durch die Außenumfangsfläche der Kopfstütze gebildet ist. Die Ausgestaltung schließt nicht aus, dass eine insbesondere das Umlenkmittel bildende Schale bis zu der Hüllfläche der Kopfstütze reicht. Die Umlenkfläche befindet sich aber ausschließlich bzw. nahezu ausschließlich bezogen auf die Hüllfläche nach innen versetzt, d.h. innerhalb der ungestörten Kontur des Kopfpolsters. Die zuvor vorgestellte Weiterbildung führt zu einer im wesentliche ungestörten Anmutung einer Kopfstütze. Diese kann allein unter gestalterischen Gesichtspunkten ausgebildet werden. Das Umlenkmittel liegt innerhalb der Hüllfläche und damit für den Betrachter zunächst verdeckt, was eine ästhetische Gestaltung der Kopfstütze ermöglicht.

Die Führung der Warmluft über eine Luftstrecke ermöglicht im Grunde eine beliebige Verschieblichkeit der Kopfstütze und eine Anordnung derselben relativ zu der Oberseite der Rückenlehne. Mitunter ist es aber bei relativ kleinen Fahrzeuginsassen notwendig, die Kopfstütze direkt auf die Oberseite der Rückenlehne aufzusetzen. Diesem Umstand trägt die vorliegende Erfindung dadurch Rechnung, dass das Umlenkmittel einem in der oberseitigen Fläche der Rückenlehne liegenden Öffnungsquerschnitt der Ausblasöffnung gegenüberliegt und bevorzugt einen den Öffnungsquerschnitt überdeckenden Bereich hat, der zur Umlenkung des abgegebenen Luftstromes vorgesehen ist. Als der Ausblasöffnung gegenüberliegendes Umlenkmittel wird hierbei ein solches verstanden, welches in jeder beliebigen Höhenlage der Kopfstütze relativ zu der Rückenlehne von dem Warmluftstrom beaufschlagt wird und bei einer untersten Stellung, bei der die Kopfstütze nahezu oder vollständig auf der Oberseite der Rückenlehne aufsitzt, in Verlängerung eines Luftkanals vorgesehen ist, der zu der Ausblasöffnung führt und in die Rückenlehne integriert ist.

Zur bestmöglichen Ausrichtung des Luftstromes und Verteilung über das Umlenkmittel und insbesondere im Hinblick auf eine angenehme Umströmung des Kopf- und Nackenbereiches in der vorerwähnten untersten Stellung der Kopfstütze, wird gemäß einer weiteren bevorzugten Ausgestaltung der vorliegenden Erfindung vorgeschlagen, die Ausblasöffnung an ihrer der Rückseite der Rückenlehne nahen Umrandung mit einem Luftleitelement zu versehen, welches von der Oberseite der Rückenlehne abragt und zur Vorderseite der Rückenlehne gerichtet ist. Durch dieses Luftleitelement wird der letzte Teilabschnitt eines Kanals zur Warmluftführung innerhalb der Rückenlehne nach außen bis zu der Ausblasöffnung verlängert. Des weiteren erfolgt über das Luftleitelement eine leichte Ausrichtung des Luftstromes von der zunächst in der Regel streng vertikalen Ausrichtung, gegebenenfalls sogar leicht nach hinten geneigten Ausrichtung, in eine zu dem Fahrzeuginsassen führenden, also nach vorne geneigte Ausrichtung. Das vorerwähnte Luftleitelement ist in der Regel einstückig mittels Spritzgießen als Teil des die Warmluft in der Rückenlehne führenden Kanals ausgebildet und überragt üblicherweise einen Flansch, der auch zur Befestigung des Kanals an der Oberseite der Rückenlehne auf dieser aufliegt und mit dem Kanal verbunden ist. Der Kanal kann selbstverständlich mehrstückig in der Rückenlehne ausgeformt sein.

Das vorerwähnte Luftleitelement wirkt vorzugsweise mit dem Umlenkmittel in der vorerwähnten untersten Stellung der Kopfstütze, in der die Kopfstütze an der Oberseite der Rückenlehne nahezu oder vollständig anliegt, derart zusammen, dass die an der Oberseite der Rückenlehne vorgesehene Ausblasöffnung zu der Vorderseite der Rückenlehne verlagert wird. Diese verlagerte Ausblasöffnung wird durch die Vorderseite der Rückenlehne und einer Kante gebildet, die die Vorderseite des Umlenkmittels und die Unterseite des Kopfpolsters begrenzt. Diese Kante wird vorzugsweise durch das Umlenkmittel selbst gebildet und erstreckt sich im wesentlichen in horizontaler Richtung bis über die seitlichen Ränder des Luftleitelementes und ist von dort nach unten in Richtung auf die Rückenlehne gezogen, um das Luftleitelement und die an der Oberseite der Rückenlehne ausgebildete Ausblasöffnung, seitlich zu fassen. In der Vorderansicht der Kopfstütze hat das Umlenkmittel dementsprechend vorzugsweise eine U-förmige Form und befindet sich vorzugsweise zwischen Tragstangen der Kopfstütze.

Weitere Einzelheiten und Vorteile der vorliegenden Erfindung entnehmen Sie aus der nachfolgenden Beschreibung eines Ausführungsbeispiels in Verbindung mit der Zeichnung. In dieser zeigen:
- Figur 1: eine Vorderansicht auf ein Ausführungsbeispiel;
- Figur 2: eine perspektivische Seitenansicht des in Figur 1 ausgeführten Ausführungsbeispiel und
- Figur 3: eine Längsschnittansicht des in den Figuren 1 und 2 gezeigten Ausführungsbeispiels.

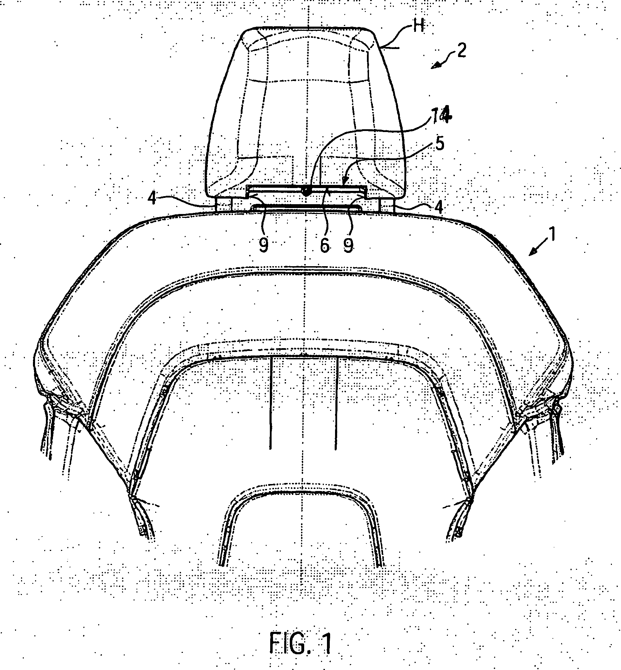

Die Figur 1 zeigt den oberen Teil einer Rückenlehne 1 eines Fahrzeugsitzes, dessen übrigen Teile für die Erläuterung der Erfindung ohne Belang sind. Die Rückenlehne trägt eine Kopfstütze 2 mit einem diese Kopfstütze weich umgebenden Kopfpolster 3. Die Kopfstütze 2 ist über Tragstangen 4 höhenverschieblich relativ zu der Rückenlehne 1 montiert, wobei die Tragstangen 4 hierzu in an sich bekannter Weise verschieblich in einer Halterung in der Rückenlehne 1 gehalten sind.

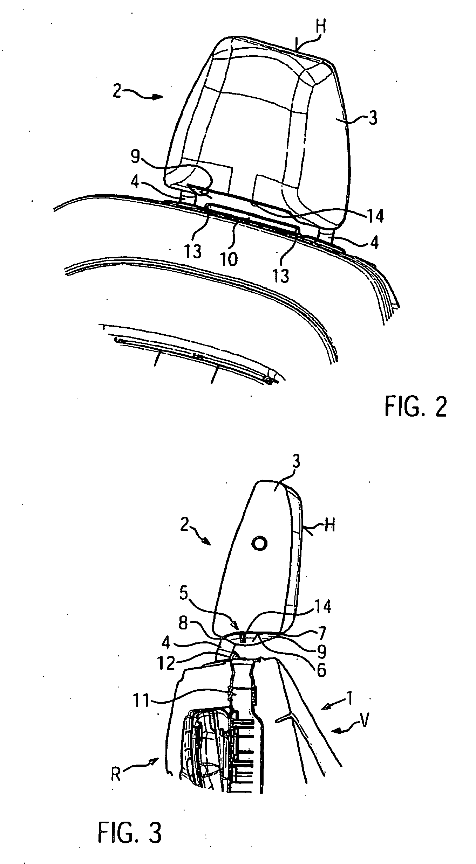

Auf Seiten der Kopfstütze 2 befindet sich zwischen den Tragstangen 4 ein Umlenkmittel 5, welches bei dem gezeigten Ausführungsbeispiel durch eine spritzgegossene Kunststoffschale gebildet ist, deren nach außen gerichtete Fläche eine Umlenkfläche 6 bildet, die im wesentlichen konkav ausgeformt ist und nach innen relativ zu einer das Kopfpolster 3 umfassenden Hüllfläche versetzt also integriert in das Kopfpolster vorgesehen ist. Diese Anordnung wird insbesondere in der Schnittansicht gemäß Figur 3 deutlich. Es ist zu erkennen, dass die Umlenkfläche 6 innerhalb der in Figur 3 mit Großbuchstaben H gekennzeichneten Hüllfläche vorgesehen ist, d.h. gegenüber der Hüllfläche H nach innen (oben) versetzt angeordnet ist. Das Umlenkmittel 5 hat eine vordere Kante 7, die in Richtung auf den Fahrzeuginsassen hin das Umlenkmittel 5 begrenzt und absatzfrei in die Hüllfläche H des Kopfpolsters 3 übergeht. Das andere Ende des Umlenkmittels 5 in der Schnittansicht (vgl. Figur 3) wird durch eine hintere Kante 8 vorgegeben, welche sich an der Unterseite des Kopfpolsters 3 befindet. Auch die hintere Kante 8 geht bündig in die Hüllflache H über. Die hintere Kante 8 befindet sich in etwa im letzten Viertel der Kopfstütze 2 in deren Dickenrichtung (also in Fahrtrichtung). Auf Höhe der hinteren Kante 8 schließen in etwa die Tragstangen 4 an die Kopfstütze 2 an. In der Seitenansicht (vgl. Figur 1) bildet das Umlenkmittel 5 die Umlenkfläche 6 seitlich begrenzende Wangen 9 aus, die sich in etwa in der Vertikalen erstrecken und von der Bepolsterung der Kopfstütze 2 außenseitig eingefasst sind.

Es ergibt sich, dass die das Umlenkmittel 5 bildende Kunststoffschale absatzfrei an die Hüllfläche H des Kopfpolsters 3 anschließt und sich zwischen den beiden Tragstangen 4 befindet.

Bei dem in der Zeichnung gezeigten Ausführungsbeispiel ist die Umlenkfläche 6 in der Schnittansicht gemäß Figur 3 konkav ausgeformt, wohingegen sie in der Seitenansicht im wesentlichen eben ist. Aber auch in der Seitenansicht kann die Umlenkfläche 6 konkav oder abschnittsweise konkav ausgebildet sein, um beispielsweise zwei getrennte Teilluftströme nach vorne abzustrahlen.

Unmittelbar gegenüberliegend der Umlenkfläche 6 ist hierzu eine Ausblasöffnung 10 eines Warmluftkanals 11 vorgesehen, der im wesentlichen innerhalb der Rückenlehne 1 angeordnet ist, und zwar mittig zwischen der Vorder- bzw. Rückseite V; R, und Teil eines Warmluftmoduls ist, der einen hier nicht gezeigten Zuheizer und ein ebenfalls nicht gezeigtes Gebläse umfasst. Die Ausblasöffnung 10 liegt dem Umlenkmittel 5 gegenüber. Dementsprechend befinden sich die Ausblasöffnung 10 und die Umlenkfläche 6 in einer Ebene, die parallel zu der Verschieberichtung der Tragstangen 4 ist. Die Ausblasöffnung 10 wird rückseitig von einem Luftleitelement 12 begrenzt, welches von der Oberseite der Rückenlehne 1. abragt und schräg nach vorne zur Vorderseite V der Rückenlehne 1 geneigt ist. Dieses Luftleitelement 12 weist seitliche Wangen 13 auf, die im wesentlichen dreieckförmig ausgebildet sind und sich zwischen der Oberseite der Rückenlehne 1 und dem im wesentlichen ebenen Luftleitelement 12 erstrecken. Der Abstand der einander gegenüberliegenden Wangen 13 ist ein wenig geringer als der entsprechende Abstand der Wangen 9. Auf Grund der Ausgestaltung des Luftleitelementes hat die Ausblasöffnung 10 eine leicht nach vorne geneigte Ausrichtung. Die Ausblasöffnung 10 erstreckt sich vorliegend zwischen dem vorderen Rand des Warmluftkanals 11 und dem vorderen Rand des Luftleitelementes 12 in der Seitenansicht einerseits und zwischen den beiden Wangen 13 in der Vorderansicht andererseits.

In einer untersten Stellung der Kopfstütze 2, in welcher diese maximal in Richtung auf die Rückenlehne 1 abgesenkt ist und mit ihrem Polster 3 auf der Oberseite der Rückenlehne 1 anliegt, überdeckt die Umlenkfläche 6 die Ausblasöffnung 10, wobei die Wangen 9 der Umlenkfläche 6 die zugeordneten Wangen 13 außenseitig umfassen. In dieser untersten Stellung ergibt sich eine zur Vorderseite V verlagerte Ausblasöffnung zwischen der vorderen Kante 7 und der Vorderseite der Rückenlehne 1. Mit anderen Worten wird die den Warmluftkanal 11 verlassende Warmluft zunächst zwischen der Oberseite der Rückenlehne 1 und der Umlenkfläche 6 geführt und tritt in einem Auslass aus, der im wesentlichen in einer vertikalen Ebene liegt und die Vorderseite V der Rückenlehne mit der Kante 7 der Umlenkfläche 6 verbindet.

Bei dem gezeigten Ausführungsbeispiel ist mittig in der Umlenkfläche 6 sowohl in den Vorderansicht gemäß Figur 1 als auch in der Schnittansicht gemäß Figur 3 ein Sensor 14 angedeutet, der der Steuerung des Warmluftmoduls dient und die Temperatur der durch die Ausblasöffnung 10 abgegebenen Luft erfasst. Alternativ kann die Steuerung des Moduls auch in an sich bekannter Weise durch einen Sensor erfolgen, der zwischen der Ausblasöffnung 10 und dem Zuheizer angeordnet ist und die Temperatur der Warmluft in dem Warmluftkanal 11 erfasst. Weiterhin ist es möglich, auf einen entsprechenden Sensor zu verzichten und die Temperatur der durch den Warmluftkanal 11 abgegebenen Luft indirekt über die Leistungsaufnahme und/oder den Widerstand des Zuheizers zu ermitteln.

### Bezugszeichenliste

- 1: Rückenlehne
- 2: Kopfstütze
- 3: Kopfpolster
- 4: Tragstange
- 5: Umlenkmittel
- 6: Umlenkfläche
- 7: vordere Kante
- 8.: hintere Kante
- 9: Wange
- 10.: Ausblasöffnung
- 11: Warmluftkanal
- 12: Luftleitelement
- 13: Wange
- 14: Sensor
- H: Hüllfläche
- V: Vorderseite
- R: Rückseite

## Patentansprüche

1. Fahrzeugsitz mit einer Rückenlehne (1), einer höhenverstellbaren Kopfstütze (2) mit Kopfpolster (3) und einer Belüftungsvörrichtung, deren Ausblasöffnung (10) zum Ausblasen eines Warmluftstromes an der Oberseite der Rückenlehne (1) angeordnet ist, **gekennzeichnet durch**
ein in einem unteren Bereich der Kopfstütze (2) vorgesehenes, in das Kopfpolster (3) integriertes Umlenkmittel (5) welches eine in die Kopfstütze (2) integrierte und der Ausblasöffnung (10) gegenüberliegende Ausformung hat, **durch** welches der von der Ausblasöffnung (10) abgegebene Warmluftstrom in den Kopf und/oder Nackenbereich eines Sitzinsassen umlenkbar ist.

2. Fahrzeugsitz nach Anspruch 1, **dadurch gekennzeichnet, dass** das Umlenkmittel (5) eine Kunststoffschale ausbildet, welche an dem Kopfpolster, insbesondere über Einklipsen befestigt ist.

3. Fahrzeugsitz nach Anspruch 1 oder 2, **dadurch gekennzeichnet, dass** das Umlenkmittel (5) eine luftundurchlässige, den Warmluftstrom diffus streuende Oberfläche aufweist.

4. Fahrzeugsitz nach einem der vorherigen Ansprüche, **dadurch gekennzeichnet, dass** das Umlenkmittel (5) eine raue Oberflächenstruktur hat.

5. Fahrzeugsitz nach einem der vorherigen Anspruche, **dadurch gekennzeichnet, dass** das Umlenkmittel (5) an dem Kopfpolster (3) relativ zu einer Hüllfläche desselbigen nach innen versetzt angeordnet ist.

6. Fahrzeugsitz nach einem der vorherigen Ansprüche, **dadurch gekennzeichnet, dass** das Umlenkmittel (5) einem in der oberseitigen Fläche der Rückenlehne (1) liegenden Öffnungsquerschnitt der Ausblasöffnung (10) gegenüberliegt und einen den Öffnungsquerschnitt überdeckenden Bereich zur Umlenkung des abgegebenen Warmluftstromes aufweist.

7. Fahrzeugsitz nach einem der vorherigen Ansprüche, **dadurch gekennzeichnet, dass** die Ausblasöffnung (10) an ihrer der Rückseite der Rückenlehne (1) nahen Umrandung ein von der Oberseite der Rückenlehne (1) abragendes und zur Vorderseite der Rückenlehne (1) gerichtetes Luflleitelement (12) aufweist.

8. Fahrzeugsitz nach Anspruch 7, **dadurch gekennzeichnet, dass** das Luftleitelement (12) zur Verlängerung einer in der Rückenlehne (1) verlaufenden Wandung eines mit der Ausblasöffnung (10) endenden Luftkanals der Belüftungsvorrichtung vorgesehen ist.

9. Fahrzeugsitz nach Anspruch 7 oder 8, **dadurch gekennzeichnet, dass** das Luftleitelement (12) in einer untersten Stellung der Kopfstütze (2) an das Umlenkmittel (5) derart angrenzt, dass eine die Vorderseite des Umlenkmittels (5) und die Unterseite des Kopfpolsters (3) begrenzende Kante (7) mit der Vorderseite der Rückenlehne (1) eine zu dieser Vorderseite verlagerte Ausblassöffnung der Belüftungsvorrichtung ausbildet.

10. Fahrzeugsitz nach Anspruch 9, **dadurch gekennzeichnet, dass** das Umlenkmittel (5) in einer Vorderansicht der Kopfstütze (2) zwischen den Tragstangen (4) derselbigen angeordnet ist und eine zur Rückenlehne (1) geöffnete U-Form derart ausbildet, dass das Luftleitelement (12) in einer untersten Stellung der Kopfstütze von dem Umlenkmittel (5) begrenzt wird, welches an dem Kopfpolster (3), insbesondere über Einklipsen befestigt ist.

11. Fahrzeugsitz nach einem der vorherigen Ansprüche, **dadurch gekennzeichnet, dass** das Umlenkmittel (5) aus einem wärmebeständigen Material ausgeformt ist.

## Claims

1. Vehicle seat with a back rest (1), a head restraint (2), which is adjustable in the height and which has a head cushion (3), and a ventilation device whose exhaust vent (10) is arranged for venting a warm airflow at the upper side of the back rest (1), **characterised by**
a diverting means (5), provided in a lower area of the head restraint (2) and integrated into the head cushion (3) and provided with an implementation integrated into the head restraint (2) and arranged opposite to the exhaust vent (10), wherein the warm airflow issuing from the exhaust vent (10) can be diverted into the head and / or neck area of a seat passenger by means of this diverting means (5).

2. Vehicle seat according to Claim 1, **characterised in that** the diverting means (5) forms a plastic shell which is attached to the head cushion, particularly by being clipped into place.

3. Vehicle seat according to Claim 1 or 2, **characterised in that** the diverting means (5) has a surface that is impermeable to air and that diffusely spreads the warm airflow.

4. Vehicle seat according to one of the preceding claims, **characterised in that** the diverting means (5) has a rough surface structure.

5. Vehicle seat according to one of the preceding claims, **characterised in that** the diverting means (5) is arranged on the head cushion (3) in such a way that it is offset inward relative to a covering surface of said head cushion (3).

6. Vehicle seat according to one of the preceding claims, **characterised in that** the diverting means (5) lies opposite an opening cross-section of the exhaust vent (10) that lies in the upper surface of the back rest (1) and has an area that covers the opening cross-section for the purpose of diverting the issued warm airflow.

7. Vehicle seat according to one of the preceding claims, **characterised in that** the exhaust vent (10), on its border strip near to the back side of the back rest (1), has an
air channelling element (12) that projects from the upper side of the back rest (1) and that is aimed toward the front side of the back rest (1).

8. Vehicle seat according to Claim 7, **characterised in that** the air channelling element (12) is provided for the purpose of extending a wall of an air channel of the ventilation device that ends in the exhaust vent (10) and that runs in the back rest (1).

9. Vehicle seat according to Claim 7 or 8, **characterised in that** the air channelling element (12), in a lowest position of the head restraint (2), borders on the diverting means (5) in such a way that an edge (7), which borders on the front side of the diverting means (5) and the lower side of the head cushion (3) forms, with the front side of the back rest (1), an exhaust vent of the ventilation device, said exhaust vent being displaced with respect to this front side.

10. Vehicle seat according to Claim 9, **characterised in that** the diverting means (5), in a front view of the head restraint (2), is arranged between the supporting bars (4) of said head restraint (2) and forms a U-form that is open toward the back rest (1) in such a way that, in the lowest position of the head restraint, the air channelling element (12) is bordered by the diverting means (5), which is attached to the head cushion (3), particularly by means of being clipped in place.

11. Vehicle seat according to one of the preceding claims, **characterised in that** the diverting means (5) is formed from a heat-resistant material.

## Revendications

1. Siège de véhicule avec un dossier (1), un appui-tête (2) réglable en hauteur et pourvu d'un rembourrage d'appui-tête (3), et un dispositif d'aération dont l'ouverture de projection (10) est disposée sur le côté supérieur du dossier pour projeter un courant d'air chaud,
**caractérisé par** un déflecteur (5) qui est prévu dans une zone inférieure de l'appui-tête (2), qui est intégré dans le rembourrage d'appui-tête (3), qui a une protubérance intégrée dans l'appui-tête (2) et située en face de l'ouverture de projection (10), et grâce auquel le courant d'air chaud émis par l'ouverture de projection (10) est apte à être dévié dans la zone de la tête et/ou du cou d'un occupant du siège.

2. Siège de véhicule selon la revendication 1, **caractérisé en ce que** le déflecteur (5) forme une coque en matière plastique qui est fixée, en particulier par clipsage, au rembourrage d'appui-tête.

3. Siège de véhicule selon la revendication 1 ou 2, **caractérisé en ce que** le déflecteur (5) présente une surface imperméable à l'air, qui dissipe le courant d'air chaud de manière diffuse.

4. Siège de véhicule selon l'une des revendications précédentes, **caractérisé en ce que** le déflecteur (5) a une structure superficielle rugueuse.

5. Siège de véhicule selon l'une des revendications précédentes, **caractérisé en ce que** le déflecteur (5) est disposé sur le rembourrage d'appui-tête (3) en étant décalé vers l'intérieur par rapport à une surface d'enveloppe dudit rembourrage (3).

6. Siège de véhicule selon l'une des revendications précédentes, **caractérisé en ce que** le déflecteur (5) se trouve en face d'une section transversale, située sur la surface supérieure du dossier (1), de l'ouverture de projection (10) et présente une zone qui couvre ladite section transversale pour dévier le courant d'air chaud émis.

7. Siège de véhicule selon l'une des revendications précédentes, **caractérisé en ce que** l'ouverture de projection (10) présente, sur son bord proche du côté arrière du dossier (1), un élément de guidage d'air (12) qui dépasse du côté supérieur du dossier (1) et qui est dirigé vers le côté avant du dossier (1).

8. Siège de véhicule selon la revendication 7, **caractérisé en ce que** l'élément de guidage d'air (12) est destiné à prolonger une paroi, située dans le dossier (1), d'un conduit d'air du dispositif d'aération qui se termine par l'ouverture de projection (10).

9. Siège de véhicule selon la revendication 7 ou 8, **caractérisé en ce que** l'élément de guidage d'air (12), dans une position basse de l'appui-tête (2), est voisin du déflecteur (5) de telle sorte qu'un bord (7) qui limite le côté avant du déflecteur (5) et le côté inférieur du rembourrage d'appui-tête (3) forme avec le côté avant du dossier (1) une ouverture de projection du dispositif d'aération qui est décalée vers ce côté avant.

10. Siège de véhicule selon la revendication 9, **caractérisé en ce que** le déflecteur (5), sur une vue de face de l'appui-tête (2), est disposé entre les tiges de support (4) de celui-ci et forme un U ouvert vers le dossier (1) de telle sorte que l'élément de guidage d'air (12), dans une position basse de l'appui-tête, soit limité par le déflecteur (5) qui est fixé, en particulier par clipsage, au rembourrage d'appui-tête (3).

11. Siège de véhicule selon l'une des revendications précédentes, **caractérisé en ce que** le déflecteur (5) est formé à partir d'un matériau résistant à la chaleur
